# EUROPÄISCHE PATENTSCHRIFT

(11) **EP 2 619 047 B1**
(45) Veröffentlichungstag und Bekanntmachung des Hinweises auf die Patenterteilung: **08.07.2015**
(21) Anmeldenummer: 11755333.9
(22) Anmeldetag: 12.09.2011
(51) Int. Cl.: B60T 7/12, B60T 8/17, B60T 8/18, B60T 13/26, B60T 13/36, B60T 13/40, B60T 13/57, B60T 13/66, B60T 15/02, B60T 15/04, B60T 15/18, B60T 15/30

(54) **STEUERVENTIL FÜR SELBSTTÄTIGE DRUCKLUFTBREMSEN**
CONTROL VALVE FOR AUTOMATIC COMPRESSED-AIR BRAKES
SOUPAPE DE COMMANDE POUR FREINS À AIR COMPRIMÉ AUTOMATIQUES

(30) Priorität: 20.09.2010 EA 201001380
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: CZYPIONKA, Simon, 81825 München (DE); HELLER, Martin, 85716 Unterschleißheim (DE); KRUSCHE, Michael, 80802 München (DE); KRYLOV, Vladimir, Moskau 127322 (RU); ROMANOV, Sergey, Moskau 111558 (RU); SIMON, Timm, 80636 München (DE)
(74) Vertreter: Schönmann, Kurt
(86) Internationale Anmeldenummer: PCT/EP2011/065717
(87) Internationale Veröffentlichungsnummer: WO 2012/038280

(56) Entgegenhaltungen:
- EP-A2- 1 520 764
- DE-A1- 1 650 571
- DE-A1- 19 835 635
- DE-B- 1 207 953
- GB-A- 2 093 938
- US-A- 4 163 587

## Beschreibung

Die vorliegende Erfindung betrifft ein Steuerventil für selbsttätige Druckluftbremsen zur Bildung eines Bremszylinderdruckes nach Maßgabe einer Druckdifferenz zwischen einem Druck in der durchgehenden Hauptluftleitung eines Zuges und einem gespeicherten Referenzdruck, der vom Druck in der Hauptluftleitung abgeleitet ist.

Das Einsatzgebiet der vorliegenden Erfindung ist der Schienenfahrzeugbau. Schienenfahrzeuge haben meist eine selbsttätige (automatische) Druckluftbremse, bei der die Absenkung des Druckes in einer Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen ausgeführt.

Daneben haben Steuerventil weitere Funktionen, die mit der Füllung, dem Abschluss und der Entlüftung von Volumen mit gespeicherter Druckluft, mit der Einstellung bestimmter statischer Kennlinien des Bremszylinderdruckes und mit der Beschleunigung der Übertragung von als Druckhöhe kodierten Signalen in der Hauptluftleitung zusammenhängen.
Schließlich kommen Funktionen hinzu, die auch bei schneller und starker Änderung des Druckes in der Hauptluftleitung eine nur allmähliche Änderung des Druckes in den Bremszylindern sichern, um den auftretenden Ruck an den Fahrzeugen und die Längskräfte innerhalb des Zuges zu begrenzen.

Aus dem Fachbuch Asadtschenko, V.R.: Avtomatitscheskije Tormosa podvishnogo Sostawa sheleznogo Transporta (russ.), Moskau 2002, Seite 71 ff geht das allgemeine Prinzip eines Steuerventils hervor. Das Steuerventil ist gewöhnlich an einem Ventilträger angebracht und die notwendigen Druckluftverbindungen werden mit den betreffenden Anschlüssen am Ventilträger hergestellt. Innerhalb des Trägers befinden sich Kammern für einen Steuerdruck S (Schieberkammer-Druck) und einen Referenzdruck A. Das Steuerventil besteht hier aus einem Hauptteil und einem Leitungsteil. Die Erzeugung des Bremszylinderdruckes obliegt dem Hauptteil, während das Leitungsteil den Steuerdruck S erzeugt.
Beide Drücke, A und S, dienen zur Steuerung des Hauptteils, wobei der Druck A beim Anlegen der Bremse die Referenz zum Regelbetriebsdruck, also des ursprünglichen Druckes in der Hauptluftleitung in Fahrtstellung, der Druck S die zeitkorrigierte Referenz zum aktuellen Druck in der Hauptluftleitung während der Bremsung herstellt

Wesentliche Bestandteile des Hauptteils sind ein Steuerkolben, eine auf diesen wirkende Druckfeder, ein integriertes Doppelsitzventil zum Be- oder Entlüften des angeschlossenen Bremszylinders sowie ein Ausgleichskolben, der vom Bremszylinderdruck gegen die Kraft zweier einstellbarer Druckfedern bewegt wird, wobei eine dieser Druckfedern mit über ein exzentrisches Element, welches Bestandteil des Steuerventilträgers ist, in drei Positionen zustellbar ist. Diese Positionen dienen der Einstellung unterschiedlicher Bremszylinderdrücke für ein leeres Fahrzeug, ein Fahrzeug mittlerer Beladung oder eines beladenen Fahrzeuges. Weiter sind ein Einlassventil zur Füllung des Bremszylinders aus einem Vorratsluftbehälter und ein Auslassventil zur Entlüftung des Bremszylinders in die Atmosphäre vorhanden.

Zusätzliche Organe und Elemente des Hauptteils können sein:
- eine Empfindlichkeitsbohrung, die den Referenzdruck A und den Referenzdruck S verbindet, solange das Steuerventil nahe seiner Ausgangsstellung (Bremse gelöst) ist
- ein Rückschlagventil mit einer Düse, über welche der Vorratsluftbehälter aus der Hauptluftleitung gefüllt werden kann
- Eine Einrichtung (Verzögerer), welche nach einem ersten Anstieg des Bremszylinderdruckes den Zustrom von Luft aus dem Vorratsluftbehälter zum Einlassventil drosselt, indem durch eine Dichtung Querbohrungen der sich bewegenden Kolbenstange überschliffen (abgeschlossen) werden.
- Eine Einrichtung, welche bei Beginn der Bremsung einen Kanal der zusätzlichen Entlüftung offen hält und ihn nach dem Beginn der Bremsung abschließt, indem durch zwei Dichtungen weitere Querbohrungen der sich bewegenden Kolbenstange überschliffen (abgeschlossen) werden.

Wesentliche Bestandteile des Leitungsteils sind ein Membrankolben, welcher durch den Druck aus der Hauptluftleitung und den Steuerdruck S beaufschlagt ist. Weiter ist ein Ventil der zusätzlichen Entlüftung der Hauptluftleitung vorhanden. Die zusätzliche Entlüftung der Hauptluftleitung durch die Steuerventile dient der Beschleunigung der Druckänderung in langen Zügen, da die Druckänderung allein durch ein an der Zugspitze befindliches Führerbremsventil keine ausreichend schnelle Wirkung im ganzen Zug entfalten kann. Die aus diesem Ventil austretende Druckluft wird über einen Kanal der zusätzlichen Entlüftung dem Hauptteil zugeführt und trifft dort auf die Einrichtung, welche den Kanal nach dem Beginn der Bremsung abschließt, um die zusätzliche Entlüftung auf das richtige Maß zu begrenzen.

Die Wirkungsweise ist folgende:

Beim Bremsen wird der Druck in der Hauptluftleitung abgesenkt. Dementsprechend sinkt auch der am Steuerkolben anstehende Druck S, während der gegenüberliegende Referenzdruck A im Wesentlichen unverändert bleibt. Die resultierende Bewegung des Steuerkolbens gegen die Druckfeder führt zu einem Öffnen des Einlassventils. Dabei strömt Druckluft aus einem Reservoir über Querbohrungen einer hohl gebohrten Kolbenstange des Steuerkolbens zum Einlassventil und über dieses zum Bremszylinder.

Der sich einstellende Bremszylinderdruck wird dadurch bestimmt, dass der Ausgleichskolben unter der Wirkung des entstehenden Bremszylinderdruckes ausweicht, bis das Einlassventil wieder schließt. Welcher Druck sich einstellt, hängt von der Stellung Druckfedern am Ausgleichskolben ab, die durch das exzentrische Element im Träger des Steuerventils handbedient umstellbar sind.

Bei einem bestimmten Hub des Steuerkolbens wird der wirksame Querschnitt der Querbohrungen durch den Verzögerer gedrosselt, indem einige von ihnen geschlossen werden, um die Geschwindigkeit des Anstieges des Bremszylinderdruckes zu verlangsamen. Ziel dabei ist es, den Bremszylinderdruck nur so schnell ansteigen zu lassen, dass gefährliche Längskräfte in langen Zügen vermieden werden. Für den Betrieb relativ kurzer Züge ist diese Einrichtung nicht erforderlich.

Die Anordnung hat den Nachteil, dass zum Abschluss des Kanals der zusätzlichen Entlüftung durch die Einrichtung des Hauptteils mehrere Dichtungen erforderlich sind, welche über zu verschließende Bohrungen bewegt werden. Diese Bohrungen müssen einen ausreichenden Querschnitt haben, jedoch können Bohrungen der erforderlichen Größe nicht mit einer überschleifenden Dichtung abgeschlossen werden. Aus diesem Grund muß der Querschnitt auf eine größere Zahl parallel wirkender kleinerer Bohrungen aufgeteilt werden. Es entsteht ein großer baulicher Aufwand, die erreichbare Zuverlässigkeit der Dichtwirkung und die Lebensdauer sind gering, weil die über die Bohrungen schleifende Dichtung an den Kanten der Bohrungen schnell verschleißt. Jegliche Undichtheit der Dichtungen führt zu einem Übertritt von Druckluft aus dem Kanal der zusätzlichen Entlüftung in den Bremszylinder, damit zu Vorgängen, die die Dynamik der Zugbremsung insgesamt betreffen, wobei im Versagensfall gefährliche Längskräfte im Zug oder der Verlust der Kontrolle des Lokführers über die Bremsung des Zuges eintreten können.

Eine ähnliche Bauform eines Steuerventils ist in RU 2180628 dargestellt. Bei dieser Bauform wird der Abschluss des Kanals der zusätzlichen Entlüftung durch ein separates pneumatisches Organ im Hauptteil verwirklicht. Dabei wird bei Beginn der Bremsung der entstehende Bremszylinderdruck auf einen Kolben des zusätzlichen separaten Organs geleitet, der im Zusammenwirken mit einer Druckfeder nach Erreichung einer bestimmten Größe des Bremszylinderdruckes ein Sitzventil schließt und damit die Verbindung des Kanals zur Atmosphäre unterbricht. Damit ist der mit einer überschleifenden Dichtung verbundene Nachteil beseitigt, jedoch entsteht der Nachteil des baulichen Aufwandes eines eigenen Schaltorgans, dessen Kolbenflächen und Druckfedern die Genauigkeit der Arbeitsweise erschweren. Nachteilig ist auch, dass der das Schaltorgan betätigende Bremszylinderdruck eine mittelbare Größe ist, welche aus der Absenkung der Druckes in der Hauptluftleitung - der Zielgröße für den Verschluss des Kanals - über mehrere toleranz- und verzögerungsbehaftete Organe entsteht.

Eine weitere Bauform eines Steuerventils ist durch RU2395416 bekannt. Diese beinhaltet, neben mehreren Verbesserungen rein konstruktiver Art, eine Einrichtung zum Abschluss des Kanals der zusätzlichen Entlüftung im Hauptteil, welche mit nur noch mit einer, durch Bohrungen überschliffenen doppeltwirkenden Dichtung arbeitet. Das Problem der begrenzten Lebensdauer und geringen Zuverlässigkeit einer überschleifenden Dichtung wird damit nicht grundsätzlich behoben.

Die Druckschrift DE 1 207 953 B1 wird als nächstliegender Stand der Technik angesehen und offenbart ein Steuerventil für eine selbsttätige Vakuumsbremseinrichtung an Schienenfahrzeugen. Das Steuerventil weist einen einerseits vom Hauptluftleitungsdruck und andererseits vom Druck der Bremszylinder-Unterkammer beaufschlagbaren Steuerkolben auf, mit dessen Hilfe ein erstes Ventilglied in der Verbindung zwischen Atmosphäre und Bremszylinder-Unterkammer und ferner ein zweites Ventilglied in der Verbindung zwischen letzterer und der Hauptluftleitung steuerbar sind. Das erste Ventilglied weist eine zentrale Bohrung und ein dazu konzentrisch angeordnetes, in Schließrichtung federbelastetes Hilfsventil auf, welches mittels eines Schaftes des Steuerkolbens vor dem Öffnen des ersten Ventilgliedes anhebbar ist. Das zweite Ventilglied ist als Doppelventil ausgebildet, dessen einer in Bremslösezustand mit dem Ventilglied zusammenwirkender Ventilsitz der Unterkammer des Bremszylinders und dessen anderer Ventilsitz der Hauptluftleitung zugeordnet sind. Die zwischen diesen Ventilsitzen liegende Kammer ist an die Steuerkolbenunterkammer angeschlossen. In der Mitte zwischen den beiden Ventilsitzen ist ein in Richtung zu dem der Unterkammer zugeordneten Ventilsitz federbelasteter und in entgegengesetzter Richtung bewegbarer Anschlagring vorgesehen, mit dessen Hilfe das durch den Steuerkolben zu dem der Hauptluftleitung zugeordneten Ventilsitz hin bewegbare Doppelventil beim Bremsenanlegen vorübergehend in dieser Mittelstellung haltbar ist. Durch das kurzzeitige, wiederholte Öffnen und Schließen der Verbindung zwischen der Bremszylinder-Unterkammer und der Hauptluftleitung wird eine gleichmäßige Unterdruckverteilung in den Bremszylinder-Unterkammern und somit ein äußerst gleichmäßiges und auch rasches Lösen sämtlicher Bremsen im Zug erreicht.

Der Erfindung liegt die Aufgabe zugrunde, ein Steuerventil zu schaffen, mit welchem der Abschluss des Kanals der zusätzlichen Entlüftung mit geringem baulichen Aufwand bei einer hohen Lebensdauer und Zuverlässigkeit erreicht wird.

Die Aufgabe wird ausgehend von einem pneumatischen Steuerventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Hauptteil ein Ventil enthält, bestehend aus einem Ventilkörper, einer Druckfeder und einem Ventilsitz, wobei am Ventilkörper und Ventilsitz Druckräume gegenüberliegen, die mit dem Kanal der Zusätzlichen Entlüftung (KZE) bzw. dem Bremszylinder (C) in Verbindung stehen, und der Ventilkörper über eine mechanische Verbindung mit dem Steuerkolben über die Kolbenstange verbunden ist.

Der Erfindung liegt die Erkenntnis zu Grunde, dass eine hohe Lebensdauer und Zuverlässigkeit erreicht wird, wenn Steuerungsfunktionen direkt mechanisch vom Hauptkolbensystem auf ein Sitzventil übertragen werden. Sitzventile können ohne Verschleiß größere Querschnitte öffnen und schließen. Die Anbindung eines Sitzventils direkt an das Hauptkolbensystem hat den Vorteil, dass der bauliche Aufwand für Zusatzorgane und die Unwägbarkeiten in den Toleranzen solcher Zusatzorgane und abgeleiteter Steuerdrücke entfallen.Ein Vorteil der erfindungsgemäßen Lösung liegt auch darin, dass der Schaltpunkt beim Verschluss des Kanals der zusätzlichen Entlüftung stets von der durch die Bewegung des Hauptkolbens sensierten Absenkung des Druckes bei der zusätzlichen Entlüftung gesteuert ist.

Vorzugsweise umfasst die mechanische Verbindung einen mit dem Kolben verbundenen Anschlag und eine an den Ventilkörper angrenzende Stange, wobei sich Anschlag und Stange in und nahe der Ausgangsstellung des Kolbens berühren und der Ventilkörper dabei durch die Stange vom Ventilsitz gegen die Wirkung der Druckfeder abgehoben ist. Hierdurch wird eine einfache und robuste konstruktive Lösung erzielt.

Ferner wird gemäß einer die Erfindung verbessernden Maßnahme vorgeschlagen, dass der Anschlag und die Stange ab einem bestimmten Hub des Kolbens außer Eingriff kommen, wobei diese den Freiraum zur Bewegung des Ventilkörpers unter der Wirkung der Druckfeder auf den Ventilsitz freigeben, und dass der genannte Hub des Kolbens vorteihafter Weise durch die Kraft der an diesem anliegenden Druckfeder und die für die zusätzliche Entlüftung zu erzielende Differenz der Drücke A und S bestimmt ist.

Weitere, die Erfindung verbessernde Maßnahmen werden nachstehend gemeinsam mit der Beschreibung bevorzugter Ausführungsbeispiele der Erfindung anhand der Figuren näher dargestellt.

Es zeigen:
- Fig.1: einen schematischen Längsschnitt durch ein pneumatisches Steuerventil als Stellglied für eine geregelte Druckluftbeaufschlagung eines Bremszylinders nach einem ersten Ausführungsbeispiel,
- Fig.2: einen schematischen Längsschnitt durch ein pneumatisches Steuerventil nach einem anderen Ausführungsbeispiel, und
- Fig.3: einen schematischen Längsschnitt durch das Ventil für den Abschluss des Kanals KZE als Detail zu Fig. 1

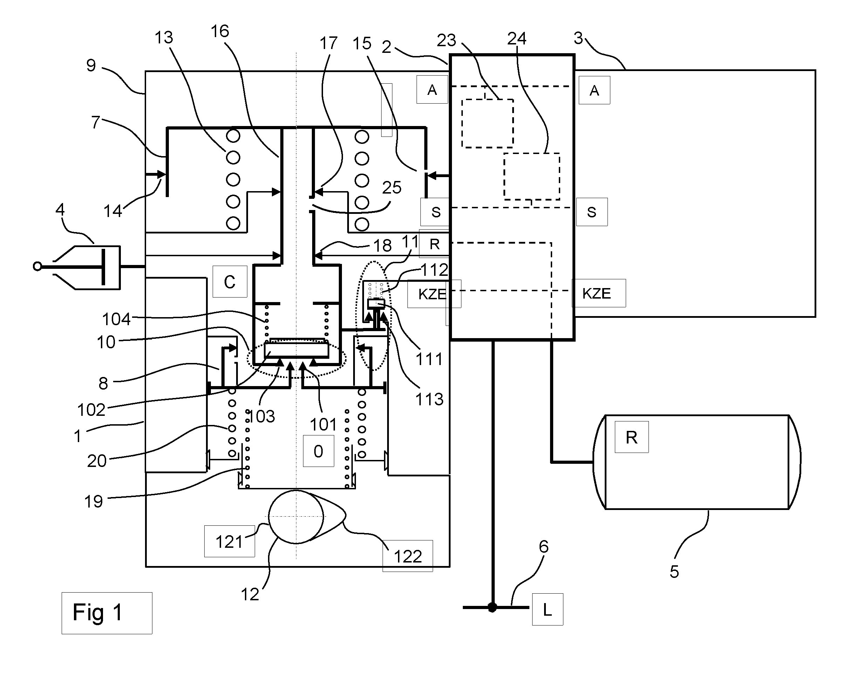

Gemäß Figur 1 besteht ein Steuerventil aus einem Hauptteil 1, einem Träger 2 und einem Leitungsteil 3. Es ist an einem hier nicht dargestellten Schienenfahrzeug montiert. Am Träger 2 sind Verbindungen zu einem Bremszylinder 4, einem Vorratsluftbehälter 5 und einer Hauptluftleitung 6 angeschlossen.

Im Träger 2 oder an diesen angeschlossen sind je ein Volumen 23 für einen Steuerdruck S und 24 für einen Referenzdruck A. Weiter enthält der Träger 2 Verbindungen für den Druck R aus dem Vorratsluftbehälter 5 und einen Kanal der zusätzlichen Entlüftung KZE, zur Leitung von Druckluft zwischen dem Hauptteil 1 und dem Leitungsteil 3.

An einer beliebigen Stelle des Steuerventils befinden sich ein nicht dargestelltes Rückschlagventil zur Füllung des Vorratsluftbehälters 5 aus der Hauptluftleitung 6, sowie ein Ventil zur manuellen Entlüftung des Referenzdruckes A.

Das Leitungsteil 3 dient dazu, mit nicht näher dargestellten Mitteln aus dem Druck der Hauptluftleitung L den Steuerdruck S und den Referenzdruck A abzuleiten, welche an das Hauptteil 1 weitergeleitet werden. Weiterhin steuert das Leitungsteil 3 bei Beginn einer Bremsung eine Verbindung von der Hauptluftleitung L zum Kanal der zusätzlichen Entlüftung KZE.

Das Hauptteil 1 beinhaltet in einem Gehäuse 9 einen Steuerkolben 7, einen Ausgleichskolben 8, ein Doppelsitzventil 10, ein Ventil 11 für den Abschluss des Kanals KZE und eine Verstelleinrichtung 12 für die Einstellung der Laststellung des Steuerventils sowie weitere Elemente wie Druckfedern, Siebe (Filter) und Dichtungen.

Das Doppelsitzventil 10 besteht aus einen Auslassventil 101, einem Ventilkörper 102, einem Einlassventil 103 und einer Druckfeder 104.

Der Steuerkolben 7 ist durch die gegenüberliegenden Drücke A und S belastet, auf der Seite des S-Druckes wirkt eine Druckfeder 13. Er arbeitet mit einer Dichtung 14 zusammen, welche beide Drücke gegeneinander abdichtet. Zu dieser Dichtung 14 ist ein Bypass über eine Düse 15 wirksam, solange der Steuerkolben 7 sich nahe seiner Ausgangslage befindet. Die Dichtung 14 befindet sich im Gehäuse 9 und die Düse 15 im Steuerkolben.

Als Ausgangsstellung wird im folgenden eine Position des Steuerkolbens 7 bezeichnet, in der dieser bei Gleichheit der Drücke A und S unter der Wirkung der Druckfeder 13 an seinem Anschlag auf der Seite des Druckes A befindet, dies entspricht der Fahrtstellung bei gelöster Bremse.

Der Steuerkolben 7 besitzt weiter eine Kolbenstange 16, die zwischen zwei Dichtungen 17 und 18 eine Zuführung 25 des Druckes R ins Innere der Kolbenstange 16 aufweist. Am Ende der Kolbenstange 16 befindet sich das Doppelsitzventil 10, welches den Druck aus dem Vorratsluftbehälter R in den Bremszylinder 4, Druck C, einläßt oder aus diesem in die Umgebung 0 ausläßt.

Der Ausgleichskolben 8 wird durch den Druck C aus dem Bremszylinder 4 belastet, ihm gegenüber steht der Umgebungsdruck. Auf der Seite des Umgebungsdruckes befindet sich eine oder mehrere Druckfedern 19, 20. Mindestens eine der Druckfedern 19, 20 kann durch die Verstelleinrichtung 12 in Richtung des Ausgleichskolbens 8 verstellt werden.

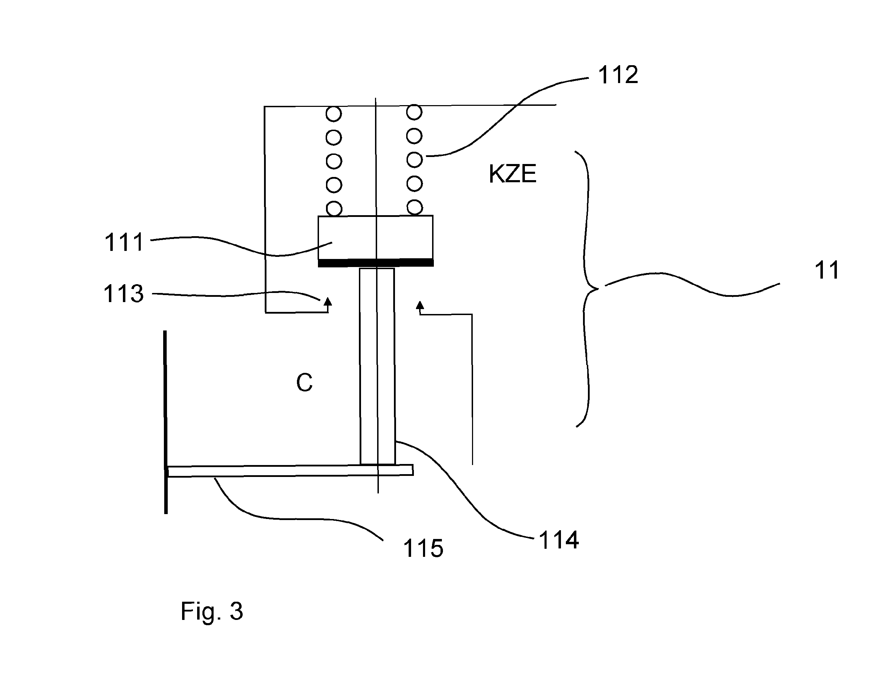

Das Ventil 11 besitzt gemäß Figur 3 für den Abschluss des Kanals KZE zu den mit dem Druck C (Bremszylinder) gefüllten Räumen einen Ventilkörper 111, einer Druckfeder 112 und einem Ventilsitz 113. Der Ventilkörper 111 und die hiervon ausgehende Stange 114 besitzen Geometrien, welche nahe einer oberen Endstellung der Kolbenstange 16 mit einem Anschlag 115 an letzterer in Eingriff kommen und das Ventil 11 gegen die Druckfeder 112 öffnen, so dass eine Verbindung vom Kanal KZE zu mit dem Druck C (Bremszylinder) gefüllten Raum entsteht. Die Wirkungsweise der Anordnung beim Bremsen des Schienenfahrzeuges ist folgende:

Zum Bremsen wird durch den Lokführer oder andere Mittel der Druck in der Hauptluftleitung, ausgehend von einem Regelbetriebsdruck, abgesenkt. Diese Absenkung wird durch das Leitungsteil 3 auf den Steuerdruck S übertragen, der Referenzdruck A bleibt zunächst unverändert. Ist die Drucksenkung ausreichend schnell und stark, um die Wirkung des Drucksausgleich über die Düse 15 sowie die Anfangskraft der Druckfeder 13 zu überwinden, kommt es zu einer Bewegung des Steuerkolbens 7 in Richtung des Ausgleichskolbens 8. Diese Bewegung ist gerade so groß, dass ein Gleichgewicht von Druck- und Federkräften am Steuerkolben 7 wieder hergestellt wird. Durch die Annäherung der Kolben kommt es zu einer Berührung des Auslassventils 101 mit dem Ventilkörper 102 des Doppelsitzventils 10.

Bei einer weiteren Bewegung in diese Richtung hebt der Ventilkörper 102 vom Einlassventilsitz 103 ab, so dass Druckluft aus dem Vorratsluftbehälter 5 über die hohle Kolbenstange 16 des Steuerkolbens 7 zum Bremszylinder 4 strömen kann.

Eine weitere Funktion des Leitungsteils besteht darin, bei Beginn einer Bremsung eine Verbindung von der Hauptluftleitung 2 zum Kanal der zusätzlichen Entlüftung KZE zu öffnen. Dadurch strömt Druckluft aus der Hauptluftleitung L über den Kanal KZE und das geöffnete Ventil 11 zum Bremszylinder 4 und, solange das Auslassventil 102 noch geöffnet ist, gleichzeitig auch in die Umgebung 0.

Infolge des Ansteigens der Druckdifferenz A - S bewegt sich der Kolben 16 mit dem Anschlag 115, der Stange 114 und dem Ventilkörper 111 nach unten bis sich letzterer auf den Ventilsitz 113 setzt und das Ventil somit geschlossen ist. Bei einem weiteren Hub des Kolbens 7 kommen die genannten Teile außer Eingriff und es entsteht ein Spiel zwischen Stange und Anschlag oder zwischen Stange und Ventilkörper.

Damit ist das Ausströmen von Druckluft aus der Hauptluftleitung L bei Bremsbeginn auf diesem Weg unterbrochen, wobei sich die durch Druckfeder 13 und Fläche des Steuerkolbens 7 bestimmte Druckdifferenz A-S, somit auch ein vorbestimmter anfänglicher Bremszylinderdruck eingestellt hat. Diese Funktion dient der Beschleunigung der Fortpflanzung der Druckabsenkung in der Hauptluftleitung L auf der Zuglänge und sichert ein schnelles und richtig dosiertes erstes Anlegen der Bremse.

Der sich aufbauende Druck C übt eine Kraft auf den Ausgleichskolben 8 aus, der sich bis zur Erreichung eines Kräftegleichgewichts mit der Kraft der Druckfedern 19, 20 bewegt. Somit entspricht jede Bremsstufe, durch den Wert der Absenkung des Druckes in der Hauptluftleitung L gesteuert, einem bestimmten Weg des Steuerkolbens 7. Sobald der vorbestimmte Bremsdruck C erreicht ist, hat auch der Ausgleichskolben 8 eine entsprechende Bewegung ausgeführt - nach welcher sowohl Ein- als auch Auslassventil geschlossen sind (Abschlussstellung).

Die Verstelleinrichtung 12 für die Einstellung der Laststellung des Steuerventils besteht aus einer Welle 121, welche ein exzentrisches Element 122 trägt. Die Welle kann von einer Seite des Steuerventils durch einen Bediensteten der Eisenbahn gedreht werden, um das Steuerventil an die aktuelle Beladung des Wagens anzupassen. Dabei wird das exzentrische Element an einen Anschlag für die Druckfeder 19 angenähert oder von dieser entfernt. Dies hat zur Folge, dass bei gleichem Weg des Ausgleichskolbens 8 durch die Druckfeder 13 eine größere oder eine kleinere Kraft ausgeübt wird. Insbesondere kann die Druckfeder 19 in der entfernten Position "leer" einen Abstand zum Ausgleichskolben 8 aufweisen, der auf dem ganzen möglichen Arbeitshub das Entstehen einer Federkraft verhindert.

Wie bereits beschrieben, entspricht der Bremszylinderdruck C infolge des Kräftegleichgewichtes am Ausgleichskolben 8 der auf die Kolbenfläche bezogenen Kraft der Druckfedern. Somit kann eine hohe Federkraft zur Erzielung eines hohen Bremszylinderdruckes C für ein beladenes Fahrzeug eingestellt werden, für ein leeres oder teilbeladenes Fahrzeug durch entgegengesetzte Verstellung des exzentrischen Elementes 122 eine geringere Federkraft für einen niedrigeren Bremsdruck erzielt.

Eine vorteilhafte Ausführung ergibt sich für das teilbeladene Fahrzeug insbesondere dann, wenn die Druckfeder eine progressive Kennlinie hat, oder wenn eine dritte Druckfeder speziell für die Stellung "teilbeladen" durch das exzentrische Element 122 spielfrei zum Ausgleichskolben eingerückt wird, wobei eine weitere Druckfeder für die Stellung "beladen" noch Spiel hat.

Für die Stellung "beladen" kann durch die progressive Kennlinie oder durch ein anfängliches Spiel der Druckfeder 19 ebenfalls ein Vorteil erzielt werden, weil die anfänglich relativ geringe Gesamt-Federkraft ein nicht zu scharfes erstes Einbremsen bewirkt, bei weiterem Arbeitshub steigen dann Federkraft und Bremszylinderdruck stärker an.

Die Verminderung des Bremszylinderdruckes C zum Lösen der Bremse erfolgt, gesteuert durch ansteigenden Druck in der Hauptluftleitung L und/oder abfallenden Druck A, in umgekehrte Richtung. Nahe der Ausgangsstellung öffnet das Ventil 11 für den Abschluss des Kanals KZE wieder. Das Steuerventil 7 ist dann für ein erneutes beschleunigtes Einbremsen bereit, sobald das Leitungsteil 3 einen Bremsbeginn erkennt und den Weg für die Druckluft aus der Hauptluftleitung L zum Kanal KZE freigibt.

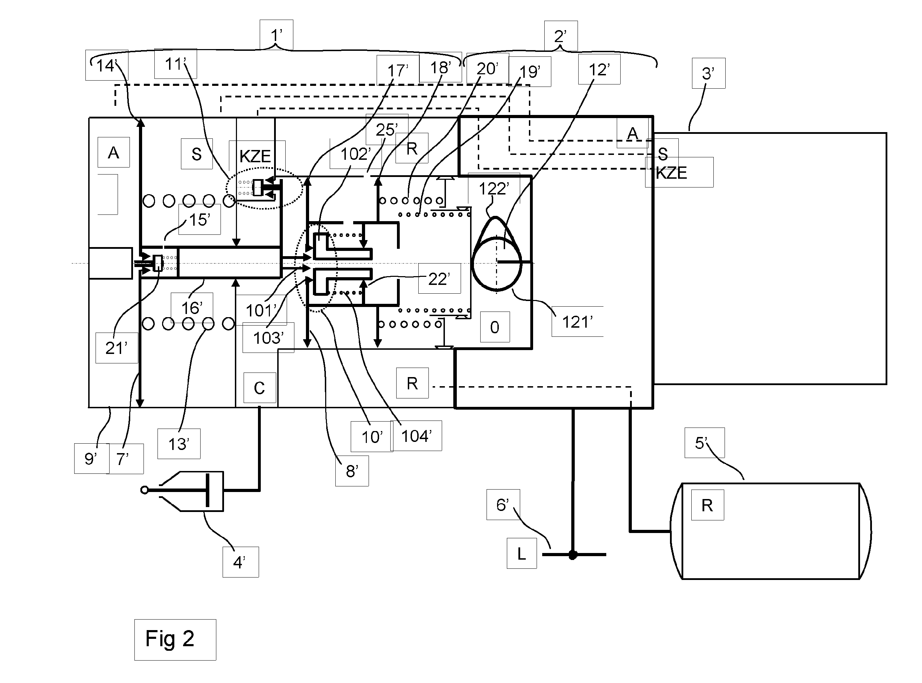

In Figur 2 ist eine alternative Ausführungsform dargestellt. Die Wirkungsweise dieser Ausführung entspricht der bereits vorstehend beschriebenen.

Anstelle der bei Figur 1 genannten, von einer Dichtung zu überschleifenden Düse in der Kolbenstange 16 für die Verbindung der Drücke A und S zur Erreichung einer bestimmten Unempfindlichkeit des Steuerventils ist ein Ventil 15' dargestellt, das durch den Steuerkolben 7' in einer geöffneten Stellung gehalten ist, solange sich dieser in oder nahe der Ausgangsstellung befindet.

Die Dichtungen 17' und 18' zur Zuführung 25' des Druckes R aus dem Vorratsluftbehälter 5' zum Einlassventilsitz 103' befinden sich hier am Ausgleichskolben 8`, ebenso wie auch das Doppelsitzventil 10'.

Die Dichtungen am Ausgleichskolben 8' und am Steuerkolben 7' dichten in dieser Ausführung in der Laufbuchse. Die Verstelleinrichtung befindet sich nun im Trägergehäuse statt im Gehäuse des Hauptteils 1' des Steuerventils 7'.

Die genannten Merkmale können unter bestimmten Bedingungen eine vereinfachte Konstruktion, eine erhöhte Zuverlässigkeit oder eine Kompatibilität mit älteren Steuerventilbauarten bewirken. Jede der aufgezählten Variationen kann einzeln in die Basisausführung integriert werden.

### Bezugszeichenliste

- 1: Hauptteil
- 2: Träger
- 3: Leitungsteil
- 4: Bremszylinder
- 5: Vorratsluftbehälter
- 6: Hauptluftleitung
- 7: Steuerkolben
- 8: Ausgleichskolben
- 9: Gehäuse
- 10: Doppelsitzventil
101 Auslassventil
102 Ventilkörper
103 Einlassventil
104 Druckfeder
- 11: Ventil für den Abschluss des Kanals KZE
111 Ventilkörper
112 Druckfeder
113 Ventilsitz
114 mechanische Verbindung, Stange
115 mechanische Verbindung, Anschlag
- 12: Verstelleinrichtung
- 13: Druckfeder
- 14: Dichtung
- 15: Düse
- 16: Kolbenstange
- 17: Dichtung
- 18: Dichtung
- 19: Druckfeder
- 20: Druckfeder
- 21: Ventil
- 22: Dichtung
- 23: Volumen für einen Steuerdruck S
- 24: Volumen für einen Steuerdruck A
- 25: Zuführung
alle Bezugszeichen in Fig. 2 mit in gleicher Entsprechung.
- A: Referenzdruck
- S: Steuerdruck
- L: Hauptluftleitung
- C: Bremszylinderdruck
- R: Vorratsluftdruck
- KZE: Kanal der zusätzlichen Entlüftung

## Patentansprüche

1. Steuerventil für selbsttätige Druckluftbremsen zur Bildung eines Bremszylinderdruckes in mindestens einem angeschlossenen Bremszylinder (4) nach Maßgabe einer Druckdifferenz zwischen einem Druck in einer angeschlossenen Hauptluftleitung (L) eines Zuges und einem gespeicherten Referenzdruck (A), bestehend aus einem Hauptteil (1), einem Leitungsteil (2) und einem Träger (3), mit einem Kanal der zusätzlichen Entlüftung (KZE) vom Leitungsteil über den Träger zum Hauptteil, wobei das Hauptteil (1) folgende Teile enthält:
einen Steuerkolben (7) mit einer Kolbenstange (16), der einerseits von dem Referenzdruck (A), andererseits von einem Steuerdruck (S) und mindestens einer Druckfeder (13) belastet ist, und
einen Ausgleichskolben (8), der vom Druck (C) des Bremszylinders (4) entgegen mindestens einer Druckfeder (20) belastet ist, und
ein Doppelsitzventil (10), bei dem durch Annäherung des Steuerkolbens (7) über eine Kolbenstange (16) ein Einlassventil (103) und durch Entfernung desselben ein Auslassventil (101) öffnet, wobei das Einlassventil (103) in einem Luftweg von einem Vorratsluftbehälter (5) in Richtung des Bremszylinders (4) liegt, wogegen das Auslassventil (101) in einen Luftweg vom Bremszylinder (4) zur Umgebung (0) liegt,
**dadurch gekennzeichnet, dass**
das Hauptteil (1) ein Ventil (11) enthält, bestehend aus einem Ventilkörper (111), einer Druckfeder (112) und einem Ventilsitz (113), wobei am Ventilkörper (111) und Ventilsitz (113) Druckräume gegenüberliegen, die mit dem Kanal der Zusätzlichen Entlüftung (KZE) bzw. dem Bremszylinder (C) in Verbindung stehen, und der Ventilkörper (111) über eine mechanische Verbindung (114, 115) mit dem Steuerkolben (7) über die Kolbenstange (16) verbunden ist.

2. Steuerventil nach Anspruch 1,
**dadurch gekennzeichnet, dass** die mechanische Verbindung (114, 115) einen mit dem Kolben (7) verbundenen Anschlag (115) und eine an den Ventilkörper (111) angrenzende Stange (114) umfasst, wobei sich Anschlag (115) und Stange (114) in und nahe der Ausgangsstellung des Kolbens (7) berühren und der Ventilkörper (111) dabei durch die Stange (114) vom Ventilsitz (113) gegen die Wirkung der Druckfeder (112) abgehoben ist.

3. Steuerventil nach mindestens einem der vorstehenden Ansprüche,
**dadurch gekennzeichnet, dass** der Anschlag (115) und die Stange (114) ab einem bestimmten Hub des Kolbens (7) außer Eingriff sind, wobei diese den Freiraum zur Bewegung des Ventilkörpers (111) unter der Wirkung der Druckfeder (112) auf den Ventilsitz (113) freigeben, und dass der genannte Hub des Kolbens (7) durch die Kraft der an diesem anliegenden Druckfeder (13) und die für die zusätzliche Entlüftung zu erzielende Differenz der Drücke A und S bestimmt ist.

4. Schienenfahrzeug, enthaltend mindestens ein Steuerventil nach einem der vorstehenden Ansprüche.

## Claims

1. A control valve for automatic compressed air brakes to generate a brake cylinder pressure in at least one connected brake cylinder (4) in accordance with a pressure difference between a pressure in a connected main air line (L) of a train and a stored reference pressure (A), comprising a main part (1), a line part (2) and a carrier (3), with an additional vent channel (KZE) from the line part to the main part via the carrier, wherein the main part (1) contains the following parts:
a control piston (7) with a piston rod (16) which is loaded firstly by the reference pressure (A) and secondly by a control pressure (S) and at least one pressure spring (13), and
a compensating piston (8) which is loaded by pressure (C) of the brake cylinder (4) against at least one pressure spring (20), and
a double-seat valve (10), at which via a piston rod (16) an inlet valve (103) is opened when the control piston (7) approaches and an outlet valve (101) is opened when the control piston moves away, wherein the inlet valve (103) lies in an air path from an air storage container (5) in the direction of the brake cylinder (4), whereas the outlet valve (101) lies in an air path from the brake cylinder (4) to the environment (0),
**characterized in that**
the main part (1) contains a valve (11) comprising a valve body (111), a pressure spring (112) and a valve seat (113), wherein at the valve body (111) and valve seat (113) lie opposing pressure chambers which are connected with the additional vent channel (KZE) and the brake cylinder (C) respectively, and the valve body (111) is connected via a mechanical connection (114, 115) with the control piston (7) via the piston rod (16).

2. The control valve as claimed in claim 1, **characterized in that** the mechanical connection (114, 115) comprises a stop (115) connected with the piston (7) and a rod (114) adjacent to the valve body (111), wherein the stop (115) and rod (114) touch in and close to the starting position of the piston (7) and the valve body (111) is thus raised from the valve seat (113) by the rod (114) against the effect of the pressure spring (112).

3. The control valve as claimed in at least one of the preceding claims, **characterized in that** the stop (115) and the rod (114) are out of engagement after a specific stroke of the piston (7), whereby these clear the space for movement of the valve body (111) under the effect of the pressure spring (112) on the valve seat (113), and **in that** said stroke of the piston (7) is determined by the force of the pressure spring (13) lying thereon and the difference between pressures A and S to be achieved for additional venting.

4. A rail vehicle containing at least one control valve as claimed in any of the preceding claims.

## Revendications

1. Soupape de commande pour des freins à air comprimé automatiques, en vue de la formation d'une pression de cylindre de frein dans au moins un cylindre (4) de frein raccordé en fonction d'une différence de pression entre une pression dans un conduit (L) d'air principal raccordé d'un train et une pression (A) de référence mémorisée, constituée d'une partie (1) principale, d'une partie (2) de conduit et d'un support (3) avec un canal de la purge (KZE) supplémentaire allant de la partie de conduit à la partie principale en passant par le support, la partie (1) principale comportant les parties suivantes :
un piston (7) de commande ayant une tige (16) de piston, qui est soumise, d'une part, à la pression (A) de référence et,
d'autre part, à une pression (S) de commande et à au moins un ressort (13) de compression et
un piston (8) de compensation, qui est soumis à la pression (C) du cylindre (4) de frein à l'encontre d'au moins un ressort (20) de compression et
une soupape (10) à siège double, dans laquelle, en rapprochant le piston (7) de commande par une tige (16) de piston, une soupape (103) s'ouvre et, en l'éloignant, une soupape (101) de sortie s'ouvre, la soupape (103) d'entrée se trouvant dans un trajet d'air allant d'un réservoir (5) d'air en direction du cylindre (4) de frein, tandis que la soupape (101) de sortie se trouve dans un trajet d'air allant du cylindre (4) de frein à l'atmosphère (0) ambiante,
**caractérisée en ce que**
la partie (1) principale comporte une soupape (11) constituée d'un corps (111) de soupape, d'un ressort (112) de compression et d'un siège (113) de soupape, des espaces sous pression se faisant face au corps (111) de soupape et au siège (113) de soupape, lesquels communiquent avec le canal de la purge (KZE) supplémentaire ou avec le cylindre (C) de frein, et le corps (111) de soupape est relié par l'intermédiaire d'une liaison (114, 115) mécanique au piston (7) de commande par l'intermédiaire de la tige (16) du piston.

2. Soupape de commande suivant la revendication 1,
**caractérisée en ce que** la liaison (114, 115) mécanique comprend une butée (115) reliée au piston (7) et une tige (114) voisine du corps (111) de soupape, la butée (115) et la tige (114) se touchant dans et près de la position initiale du piston (7) et le corps (111) de soupape étant ainsi, par la tige (114), soulevé du siège (113) de soupape à l'encontre de l'effet du ressort (112) de compression.

3. Soupape de commande suivant au moins l'une des revendications précédentes,
**caractérisée en ce que** la butée (115) et la tige (114) sont, à partir d'une certaine course du piston (7), hors de prise, celles-ci dégageant l'espace libre pour le déplacement du corps (111) de soupape sous l'effet du ressort (112) de compression sur le siège (113) de soupape et **en ce que** la course mentionnée du piston (7) est définie par la force du ressort (13) de compression s'y appliquant et par la différence des pressions A et S à obtenir pour la purge supplémentaire.

4. Véhicule ferroviaire comportant au moins une soupape de commande suivant l'une des revendications précédentes.
